# EUROPEAN PATENT APPLICATION

(11) **EP 4 284 056 A1**
(43) Date of publication of application: **29.11.2023**
(21) Application number: 23173336.1
(22) Date of filing: 15.05.2023
(51) Int. Cl.: H04W 24/04, H04W 36/00

(54) **DYNAMIC SWITCHING OF VOICE SERVICES IN PACKET SWITCHING NETWORKS**

(30) Priority: 19.05.2022 US 202217749085
(71) Applicant: T-Mobile USA, Inc., Bellevue, WA 98006-1350 (US)
(72) Inventor: Polaganga, Roopesh Kumar, Bellevue, WA, 98006-1350 (US)
(74) Representative: Schlich, George

(57) **Abstract**

Solutions for providing a voice call for a user equipment (UE) include: monitoring, by a voice service control, voice call key performance indicators (KPIs) for the voice call of the UE, when the voice call comprises a voice over new radio (VoNR) call; determining, by the voice service control, that the voice call KPIs do not meet acceptable performance criteria; determining, by the voice service control, that an eNodeB (eNB) is co-located with a gNodeB (gNB) that is serving the UE; based on at least determining that the voice call KPIs do not meet acceptable performance criteria, and determining that an eNB is co-located with the serving gNB, instructing, by the voice service control, a radio access network (RAN) to begin an inter-radio access technology (IRAT) handover (HO) for the UE to the co-located eNB; and continuing the voice call as a voice over long term evolution (VoLTE) call.

## Description

### BACKGROUND

Both fourth generation cellular (4G) and fifth generation cellular (5G) wireless networks use packet switching, rather than circuit switching, for voice services. 4G, the current widely-deployed legacy service, uses voice over long term evolution (VoLTE) and stand-alone (SA) 5G, the current next generation service, uses voice over new radio (VoNR). Although when fully deployed, VoNR promises superior performance, 5G is currently still in a build-out phase, while VoLTE is currently more well-established and ubiquitous. Thus, VoLTE may temporarily remain somewhat better-performing than the newer VoNR, in some scenarios

During the transition period from 4G to 5G, an accommodation had been made for some 5G deployments, identified as non-stand-alone (NSA) 5G, that leverage 4G voice, even while providing 5G for non-voice data service. While network carriers, may wish to move customers to the newer technology, until VoNR becomes better-established, there may be situations in which this results in a degradation of the user experience during voice calls. Whenever any legacy service is being replaced by a next generation service (e.g., 5G is replaced with 6G, 6G replaced with 7G, ....), this situation is likely to be duplicated.

### SUMMARY

The following summary is provided to illustrate examples disclosed herein, but is not meant to limit all examples to any particular configuration or sequence of operations.

Solutions for providing a voice call for a user equipment (UE) over a wireless network include: monitoring, by a voice service control, voice call key performance indicators (KPIs) for the voice call of the UE, when the voice call comprises a voice over new radio (VoNR) call; determining, by the voice service control, that the voice call KPIs do not meet acceptable performance criteria; determining, by the voice service control, that an eNodeB (eNB) is co-located with a gNodeB (gNB) that is serving the UE; based on at least determining that the voice call KPIs do not meet acceptable performance criteria, and determining that an eNB is co-located with the serving gNB, instructing, by the voice service control, a radio access network (RAN) to begin an inter-radio access technology (IRAT) handover (HO) for the UE to the co-located eNB; and continuing the voice call as a voice over long term evolution (VoLTE) call.

### BRIEF DESCRIPTION OF THE DRAWINGS

The disclosed examples are described below with reference to the accompanying drawing figures listed below, wherein:
FIG. 1 illustrates an exemplary arrangement that advantageously performs dynamic switching of voice services in a packet switching network, such as switching between voice over new radio (VoNR) and voice over long term evolution (VoLTE) in a wireless network;
FIG. 2 shows a flowchart of exemplary operations associated with the arrangement of FIG. 1;
FIG. 3 shows a flowchart of exemplary operations associated with the arrangement of FIG. 1, and which may be performed in conjunction with the flowchart of FIG. 2;
FIG. 4 shows a flowchart of exemplary operations associated with the arrangement of FIG. 1, and which also may be performed in conjunction with the flowchart of FIG. 2;
FIG. 5 shows a flowchart of exemplary operations associated with the arrangement of FIG. 1, and which may be performed in conjunction with the flowchart of FIG. 3 or FIG. 4;
FIG. 6 shows a flowchart of exemplary operations associated with the arrangement of FIG. 1, and which also may be performed in conjunction with the flowchart of FIG. 3 or FIG. 4;
FIGs. 7A-7E show additional flowcharts of exemplary operations associated with the arrangement of FIG. 1; and
FIG. 8 illustrates a block diagram of a computing device suitable for implementing various aspects of the disclosure.

Corresponding reference characters indicate corresponding parts throughout the drawings, where practical. References made throughout this disclosure. relating to specific examples, are provided for illustrative purposes, and are not meant to limit all implementations or to be interpreted as excluding the existence of additional implementations that also incorporate the recited features.

### DETAILED DESCRIPTION

Solutions for providing a voice call for a user equipment (UE) over a wireless network include: monitoring, by a voice service control, voice call key performance indicators (KPIs) for the voice call of the UE, when the voice call comprises a voice over new radio (VoNR) call; determining, by the voice service control, that the voice call KPIs do not meet acceptable performance criteria; determining, by the voice service control, that an eNodeB (eNB) is co-located with a gNodeB (gNB) that is serving the UE; based on at least determining that the voice call KPIs do not meet acceptable performance criteria, and determining that an eNB is co-located with the serving gNB, instructing, by the voice service control, a radio access network (RAN) to begin an inter-radio access technology (IRAT) handover (HO) for the UE to the co-located eNB; and continuing the voice call as a voice over long term evolution (VoLTE) call.

Aspects of the disclosure improve the performance of cellular communications by dynamically identifying whether VoNR or VoLTE provides superior end user experience and shifting the user, if necessary. This is accomplished, at least in part, by monitoring, by a voice service control, voice call KPIs for a voice call of a UE, and instructing, by the voice service control, a RAN to begin an inter-radio access technology (IRAT) handover (HO) for the UE to a co-located eNB.

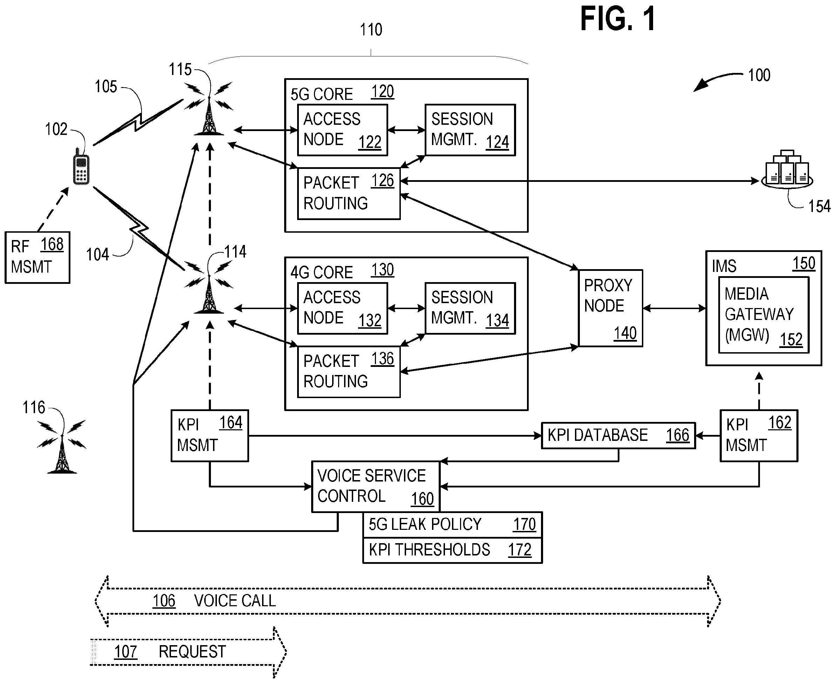

FIG. 1 illustrates an arrangement 100 that advantageously performs dynamic switching of voice services in a packet switching network, such as wireless network 110. Wireless network 110 comprises both a fifth generation cellular (5G) core 120 and a fourth generation cellular (4G) core 130, and provides a voice call 106 for a UE 102. 5G core 120 has an access node 122, which may comprise an access mobility function (AMF), a session management node 124, which may comprise a session management function (SMF), and a packet routing node 126, which may comprise a user packet function (UPF). 4G core 130 has an access node 132, which may comprise a mobility management entity (MME), a session management node 134, which may comprise a packet data network gateway (PGW)-control plane (PGW-C), and a packet routing node 136, which may comprise a PGW-control plane (PGW-C).

UE 102 communicates with 5G core 120 via a RAN 115 over an air interface 105. RAN 115 comprises a stand-alone (SA) gNB, although UE 102 may also communicate with 5G core 120 via a non-stand-alone (NSA) gNB. UE 102 communicates with 4G core 130 via a RAN 114 over an air interface 104. In FIG. 1, RAN 115 and RAN 114 are co-located, and have overlapping cells. UE 102 may also communicates with 5G core 120 or 4G core 130 using a non-co-located RAN 116 (e.g., RAN 116 is not co-located with either RAN 1145 or RAN 114). If RAN 116 provides connectivity to 5G core 120, it may comprise an SA gNB or an NSA gNB. If RAN 116 provides connectivity to 4G core 130, it may comprise an eNB.

UE 102 is within radio frequency (RF) range of each of RANs 114, 115, and 116, meaning that it is able to detect and measure signals from each of those RANs. UE 102 collects a measurement report 168 of a received signal measurement for each of RANs 114, 115, and 116. The received signal measurements may be any of , of at least one RAN within RF range of reference signal receive power (RSRP), reference signal received quality (RSRQ), and signal to interference and noise ratio (SINR). Measurement report 168 is used to determine whether UE 102 may be handed off to another RAN, for example, if the received signal strength from a RAN is sufficient.

To initiate voice call 106, UE 102 transmits a request 107 for a dedicated bearer for voice call to whichever wireless core (e.g., 5G core 120 or 4G core 130) is serving UE 102 for voice. When voice call 106 passes through 5G core 120, voice call 106 comprises a VoNR call. When voice call 106 passes through 4G core 130, voice call 106 comprises a VoLTE call. Whether passing through 5G core 120 or 4G core 130, voice call 106 reaches a proxy node 140 on its way to a media gateway (MGW) 152 in an internet protocol (IP) multimedia system (IMS) 150. In some examples, proxy node 140 comprises a proxy-call session control function (P-CSCF).

Data services for a packet data network 154 (e.g., the internet) pass through packet routing node 126 for 5G data service, or packet routing node 136 for 4G data service (connection not shown). When using packet routing node 126 for 5G data service, UE 102 may display a 5G icon, even when voice call 106 passes through 4G core 130 and comprises a VoLTE call. This dual use of 5G for data and 4G for voice occurs in 5G NSA mode. In some examples, this scenario (5G data, 4G voice) is referred to as voice over evolved packet system fallback (VoEPSFB).

A voice service control 160 performs dynamic switching of voice services in wireless network 110, such as switching voice call 106 between VoNR and VoLTE, and/or the reverse. Voice service control 160 may be located on a server anywhere within wireless network, may be distributed, and in some examples may be located at a RAN (e.g., RAN 115) or MGW 152. Voice service control 160 uses voice call KPIs (which, in some examples is a single KPI) to determine whether to switch voice call 106 between VoNR and VoLTE.

The voice call KPIs may be any of: packet loss rate, packet latency, jitter, and dropped call rate. A high packet loss rate results in a garbled conversation. Latency has multiple parts, including the time it takes to encode audio and the travel time of the packet. While latency itself may not directly affect the quality of the delivered audio, it can affect the interaction between end users (i.e., voice call participants). For example, with 100 milliseconds (ms) of latency, callers may begin to speak over each other, and at 300 ms of latency, the conversation may become overly frustrating for the callers. Packets may be dropped, if they arrive too late (due to excessive latency), also producing garbled speech. Jitter is the variation in the delay of received packets, and high jitter results in choppy-sounding voice or temporary glitches. In some examples, a mean opinion score (MOS) may be used, although MOS will be estimated in arrangement 100, for example using an R-value.

In some examples, voice service control 160 receives voice call KPIs from a KPI measurement sensor 162, located at MGW 152. In some examples, voice service control 160 additionally (or instead) receives voice call KPIs from a KPI measurement sensor 164, located at RAN 115 and/or RAN 114. In some examples, KPI measurement sensors 162 and 164 send voice call KPIs to a KPI database 166, and voice service control 160 retrieves voice call KPIs from KPI database 166. In some examples, KPI database 166 is stored with voice service control 160, whereas, in some examples, KPI database 166 is stored elsewhere and is external to voice service control 160. For example, KPI database 166 may store a list of poorly-performing voice calls, and if voice service control 160 is located at RAN 115, RAN 115 may see a call (e.g., voice call 106) that is being hosted by RAN 115 identified as a poorly performing call.

A 5G leakage policy 170 identifies whether the permits switching of voice services. 5G leakage occurs when a UE uses 4G, when SA 5G and/or NSA 5G is available. KPI thresholds 172 specify acceptable performance criteria for the voice call KPIs. In some examples, KPI thresholds 172 include one or more of a maximum packet loss rate, a maximum packet latency value, a maximum jitter value, and a maximum dropped call rate. In some examples, KPI thresholds 172 are adjusted based on changing network conditions. In some examples, KPI thresholds 172 are different for VoNR and VoLTE. In some examples, KPI thresholds 172 are different for high definition (HD) voice and non-HD voice.

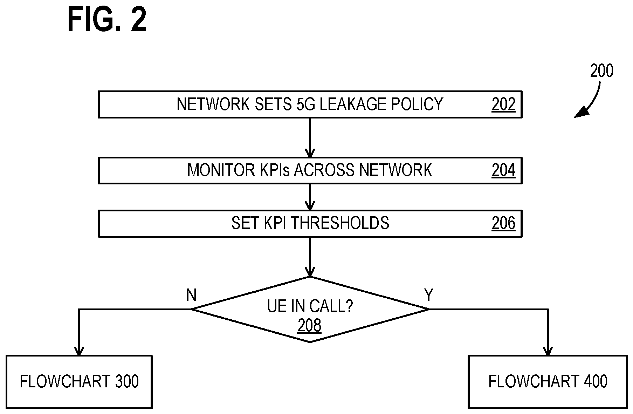

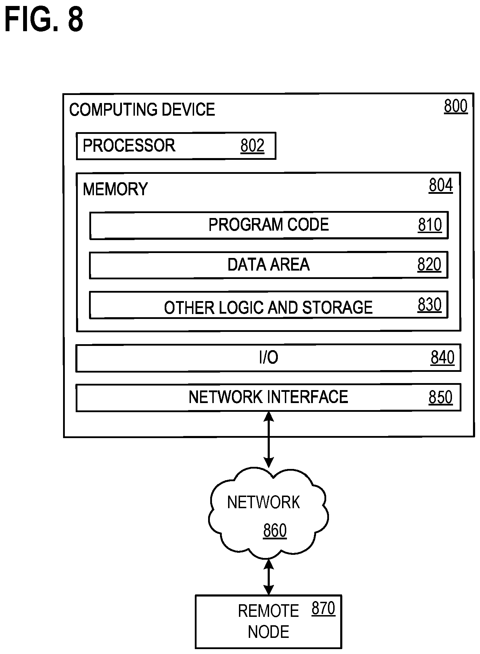

FIG. 2 shows a flowchart 200 of exemplary operations associated with arrangement 100. In some examples, at least a portion of flowchart 200 may be performed using one or more computing devices 800 of FIG. 8. Flowchart 200 commences with setting 5G leakage policy 170, and voice service control 160 storing 5G leakage policy 170, in operation 202. This may occur daily, weekly, monthly, or on a different time interval.

In operation 204 voice service control 160 monitors voice call KPIs across wireless network 110. This may include voice service control 160 receiving voice call KPIs from any of MGW 152, a RAN (e.g., RAN 114, 115, and 116), such as a gNB or an eNB, and (external) KPI database 166. In some examples, voice service control 160 is located at a RAN or is located at a MGW. In some examples, voice call 106 KPIs comprise at least one metric selected from the list consisting of: packet loss rate, packet latency, jitter, and dropped call rate. In some examples, monitoring voice call KPIs comprises monitoring MO voice call KPIs and/or MT voice call KPIs. In some examples, voice call 106 comprises a video call with voice.

Operation 206 sets a voice call performance threshold, such as KPI thresholds 172. In some examples, this includes setting a voice call performance threshold based on at least voice call 106 comprising HD voice versus non-HD voice, and/or setting a voice call performance threshold based on at least voice call 106 comprising VoNR versus VoLTE. In some examples, the voice call performance threshold comprises at least one performance metric selected from the list consisting of: a maximum packet loss rate, a maximum packet latency value, a maximum jitter value, and a maximum dropped call rate.

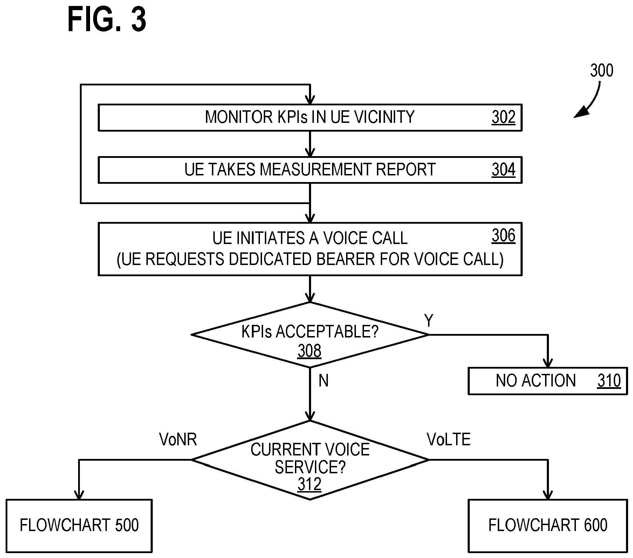

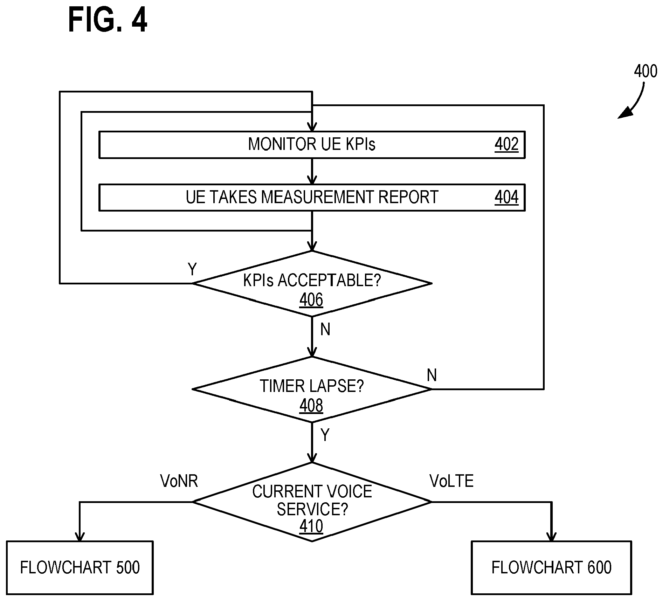

In operation 208 voice service control 160 determines whether UE 102 is currently in a voice call. If so, flowchart 300 of FIG. 3 is next. Otherwise, flowchart 400 of FIG. 4 is next.

FIG. 3 shows a flowchart 300 of exemplary operations associated with arrangement 100, and which may be performed in conjunction with flowchart 200. In some examples, at least a portion of flowchart 300 may be performed using one or more computing devices 800 of FIG. 8. Flowchart 300 commences with operation 302, which includes, prior to voice call 106 being initiated, monitoring, by voice service control 160, voice call KPIs for RANs within RF range of UE 102.

By monitoring voice call KPIs prior to voice call 106 being initiated, voice service control 160 is able to predict whether the caller using UE 102 will have acceptable performance, or whether, upon UE 102 initiating voice call 106, voice services should be switched at that time. Some users may use data more than voice, and while a user is only using 5G data and not making a voice call, there is no need to switch voice services, even if VoNR voice call KPIs are poor in the vicinity of UE 102.

In operation 304, UE 102 collects measurement report 168 of at least one RAN within RF range of UE 102. In some examples, measurement report 168 comprises a received signal measurement for at least two RANs (e.g., RAN 114, 115, and 116). In some examples, the received signal measurement comprises a metric selected from the list consisting of: RSRP, RSRQ, and SINR. Operations 302 and 304 continue, until UE 102 initiates voice call 106 in operation 306. This involves UE 102 requesting a dedicated bearer for voice call 106, for example with request 107. Voice service control 160 detects request 107 for a dedicated bearer for voice call 106 from UE 102.

In decision operation 308, still prior to voice call 106 being initiated, voice service control 160 determines whether the voice call KPIs meet acceptable performance criteria for whichever RAN is serving UE 102 (e.g., RAN 115 if UE is on SA 5G, or RAN 114 if UE is on 4G). In some examples, determining whether the voice call KPIs meet acceptable performance criteria comprises comparing at least one voice call KPI with at least one voice call performance threshold. In some examples, determining whether the voice call KPIs meet acceptable performance criteria comprises determining that at least one voice call KPI fails against at least one voice call performance threshold.

For example, there may be separate thresholds for a maximum packet loss rate and a maximum packet latency value. The voice call KPIs may not fail either one of those separate thresholds individually. However, the combination of a relatively high packet loss rate and a relatively high packet latency may result in such a poor voice experience that voice service control 160 determines that the voice call KPIs do not meet acceptable performance criteria.

If the voice call KPIs are acceptable, flowchart 300 moves to 310 and takes no action. UE 102 remains on its current voice service. Otherwise, if voice service control 160 determines that the voice call KPIs do not meet acceptable performance criteria for a RAN serving UE 102, flowchart 300 moves to decision operation 312. If UE 102 is currently set up for VoNR (e.g., UE 102 is being served by an SA gNB), flowchart 500 is next. Otherwise, if UE 102 is currently set up for VoLTE (e.g., UE 102 is being served by an eNB), flowchart 600 is next.

FIG. 4 shows a flowchart 400 of exemplary operations associated with arrangement 100, and which also may be performed in conjunction with flowchart 200. In some examples, at least a portion of flowchart 400 may be performed using one or more computing devices 800 of FIG. 8. Flowchart 400 commences with operation 402, which includes voice service control 160 monitoring voice call KPIs for voice call 106 of UE 102.

In operation 404 UE 102 collect measurement report 168 of at least one RAN within RF range of UE 102, preferably all RANs with sufficient RF strength to possibly act as the serving RAN. In decision operation 406 voice service control 160 determines whether the voice call KPIs meet acceptable performance criteria. If the voice call KPIs meet acceptable performance criteria, flowchart 400 returns to operation 402 while voice call 106 remains ongoing. Otherwise, if in decision operation 406, voice service control 160 determines that the voice call KPIs do not meet acceptable performance criteria, flowchart 400 moves to decision operation 408 where voice service control 160 determines whether sufficient time has elapsed to perform a dynamic switch of voice services.

In some examples, a hysteresis condition is set to avoid an undesirable ping-pong effect. So, for example, a timer may be set that requires 10 seconds to 30 seconds of poor voice performance before a change of voice services is permitted. If this minimum time has not yet lapsed, flowchart 400 returns to operation 402 while voice call 106 remains ongoing.

Otherwise, flowchart 400 moves to decision operation 410. If UE 102 is currently set up for VoNR (e.g., UE 102 is being served by an SA gNB), flowchart 500 is next. Otherwise, if UE 102 is currently set up for VoLTE (e.g., UE 102 is being served by an eNB), flowchart 600 is next.

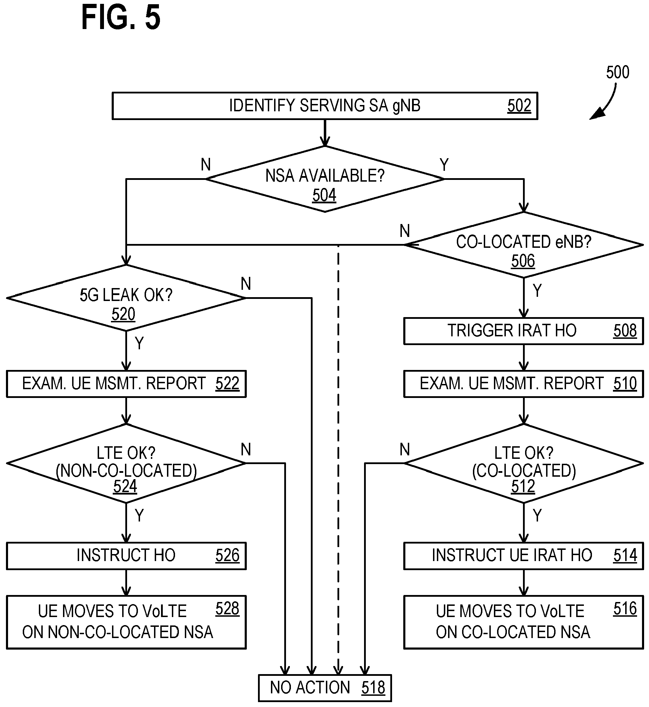

FIG. 5 shows a flowchart 500 of exemplary operations associated with arrangement 100, and which may be performed in conjunction with flowchart 300 or 400. In some examples, at least a portion of flowchart 500 may be performed using one or more computing devices 800 of FIG. 8. Flowchart 500 commences with operation 502, in which voice service control 160 identifies the serving gNB for UE 102. In the illustrated example of FIG. 1, the serving gNB for UE 102 is RAN 115, which is an SA gNB.

In decision operation 504, voice service control 160 determines whether NSA service is available to UE 102. If, in decision operation 504, voice service control 160 determines that NSA service is available to UE 102, flowchart 500 moves to decision operation 506. In decision operation 506, voice service control 160 determines whether an eNB is co-located with the serving gNB. In the illustrated example, RAN 114 is an eNB that is co-located with RAN 115, the serving gNB.

If, in decision operation 506, voice service control 160 determines that an eNB is co-located with the serving gNB, flowchart 500 moves to operation 508. Based on at least determining that the voice call KPIs do not meet acceptable performance criteria, and determining that an eNB is co-located with the serving gNB, voice service control 160 instructs a RAN (e.g., RAN 114) to begin an IRAT HO for UE 102 to the co-located eNB. In some examples, the RAN that is instructed will be the serving gNB, whereas in some examples the RAN that is instructed will be the co-located eNB (or both).

In operation 510, the co-located eNB (and/or voice service control 160) examines measurement report 168 to determine whether the IRAT HO to the co-located eNB would provide acceptable performance. Decision operation 512 determines whether the IRAT HO to the co-located eNB would provide acceptable performance, based on at least measurement report 168. If, in decision operation 512 the co-located eNB (or voice service control 160) determines that the IRAT HO to the co-located eNB would provide acceptable performance, flowchart 500 moves to operation 514, where UE 102 is instructed to perform the IRAT HO to the co-located eNB. In some examples, the co-located eNB provides this instruction.

The IRAT HO of UE 102 to the co-located eNB is performed in operation 516, switching voice service from VoNR to VoLTE (e.g., VoNR to VoEPSFB) through the co-located eNB. If voice call 106 had been ongoing (i.e., flowchart 500 follows flowchart 400), voice call 106 continues as a VoLTE call. If however, voice call 106 had not been initiated (i.e., flowchart 500 follows flowchart 300), voice call 106 is set up as a VoLTE call.

However, if the IRAT HO to the co-located eNB would not provide acceptable performance (i.e., decision operation 512 returns "No"), and in some examples, if there is no co-located eNB (i.e., decision operation 506 returns "No"), flowchart 500 moves to operation 518, and no action is taken. UE 102 stays on VoNR.

If, in decision operation 504, voice service control 160 determines that NSA service is not available to UE 102, or if in decision operation 506, in some examples, voice service control 160 determines that an eNB is not co-located with the serving gNB, flowchart 500 moves to decision operation 520. Based on at least determining that NSA service is not available to UE 102 or determining that an eNB is not co-located with the serving gNB, voice service control 160 determines whether 5G leakage policy 170 permits switching of voice services. If not, flowchart 500 moves to operation 518.

Otherwise, in operation 522, voice service control 160 examines measurement report 168 to determine whether an HO to a non-co-located eNB would provide acceptable performance, and the determination is made in decision operation 524. If not, flowchart 500 moves to operation 518.

Otherwise, if based on at least measurement report 168 decision operation 524 determines that the HO to the non-co-located eNB would provide acceptable performance, flowchart 500 moves to operation 526. Based on at least determining that the voice call KPIs do not meet acceptable performance criteria, determining that an eNB is not co-located with the serving gNB, and determining that 5G leakage policy 170 permits switching of voice services, voice service control 160 instructs a RAN to begin an HO for UE 102 to a non-co-located eNB. In some examples, this involves instructing the non-co-located eNB to begin the HO, and then instructing UE 102 (e.g., by the non-co-located eNB) to perform the HO to the non-co-located eNB.

Operation 528 performs the HO of UE 102 to the non-co-located eNB, switching voice service from VoNR to VoLTE (e.g., VoNR to VoEPSFB) through the non-co-located eNB. If voice call 106 had been ongoing (i.e., flowchart 500 follows flowchart 400), voice call 106 continues as a VoLTE call. If however, voice call 106 had not been initiated (i.e., flowchart 500 follows flowchart 300), voice call 106 is set up as a VoLTE call.

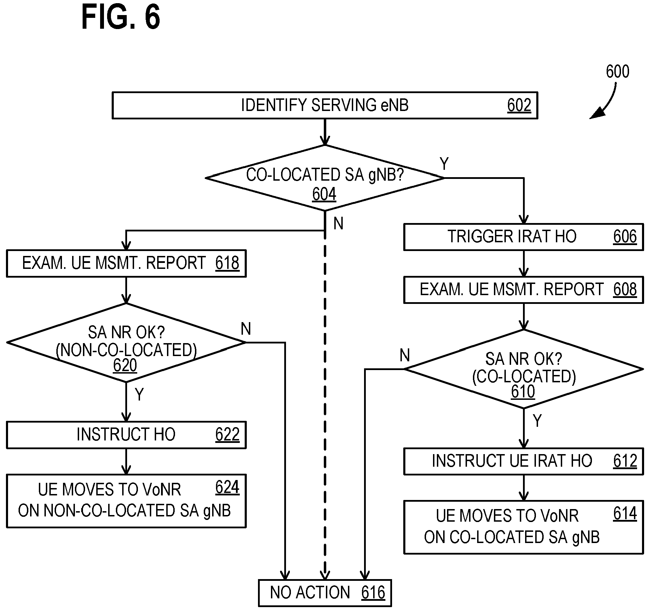

FIG. 6 shows a flowchart 600 of exemplary operations associated with arrangement 100, and which may be performed in conjunction with flowchart 300 or 400. In some examples, at least a portion of flowchart 600 may be performed using one or more computing devices 800 of FIG. 8. Flowchart 600 commences with operation 602, in which voice service control 160 identifies the serving eNB for UE 102. In the illustrated example of FIG. 1, the serving eNB for UE 102 is RAN 114. In decision operation 604, voice service control 160 determines whether an SA gNB is co-located with the serving eNB. In the illustrated example, RAN 115 is an SA eNB that is co-located with RAN 114, the serving eNB.

If, in decision operation 604, voice service control 160 determines that an SA gNB is co-located with the serving eNB, flowchart 600 moves to operation 606. Based on at least determining that the voice call KPIs do not meet acceptable performance criteria, and determining that an SA gNB is co-located with the serving eNB, voice service control 160 instructs a RAN (e.g., RAN 115) to begin an IRAT HO for UE 102 to the co-located SA gNB. In some examples, the RAN that is instructed will be the serving eNB, whereas in some examples the RAN that is instructed will be the co-located SA gNB (or both).

In operation 608, the co-located gNB (and/or voice service control 160) examines measurement report 168 to determine whether the IRAT HO to the co-located gNB would provide acceptable performance. Decision operation 610 determines whether the IRAT HO to the co-located gNB would provide acceptable performance, based on at least measurement report 168. If, in decision operation 610 the co-located gNB (or voice service control 160) determines that the IRAT HO to the co-located gNB would provide acceptable performance, flowchart 600 moves to operation 612, where UE 102 is instructed to perform the IRAT HO to the co-located gNB. In some examples, the co-located gNB provides this instruction.

The IRAT HO of UE 102 to the co-located gNB is performed in operation 614, switching voice service from VoLTE to VoNR through the co-located gNB. If voice call 106 had been ongoing (i.e., flowchart 600 follows flowchart 400), voice call 106 continues as a VoNR call. If however, voice call 106 had not been initiated (i.e., flowchart 600 follows flowchart 300), voice call 106 is set up as a VoNR call.

However, if the IRAT HO to the co-located gNB would not provide acceptable performance (i.e., decision operation 610 returns "No"), and in some examples, if there is no co-located SA gNB (i.e., decision operation 604 returns "No"), flowchart 600 moves to operation 616, and no action is taken. UE 102 stays on VoLTE.

In some examples, if in decision operation 604, voice service control 160 determines that an SA gNB is not co-located with the serving eNB, flowchart 600 moves to operation 618. Voice service control 160 examines measurement report 168 to determine whether an HO to a non-co-located SA gNB would provide acceptable performance, and the determination is made in decision operation 620. If not, flowchart 600 moves to operation 616.

Otherwise, if based on at least measurement report 168 decision operation 620 determines that the HO to the non-co-located eNB would provide acceptable performance, flowchart 600 moves to operation 622. Based on at least determining that the voice call KPIs do not meet acceptable performance criteria, and determining that an SA gNB is not co-located with the serving eNB, voice service control 160 instructs a RAN to begin an HO for UE 102 to a non-co-located SA gNB. In some examples, this involves instructing the non-co-located gNB to begin the HO, and then instructing UE 102 (e.g., by the non-co-located gNB) to perform the HO to the non-co-located gNB.

Operation 624 performs the HO of UE 102 to the non-co-located gNB, switching voice service from VoLTE to VoNR through the non-co-located SA gNB. If voice call 106 had been ongoing (i.e., flowchart 600 follows flowchart 400), voice call 106 continues as a VoLTE call. If however, voice call 106 had not been initiated (i.e., flowchart 600 follows flowchart 300), voice call 106 is set up as a VoLTE call.

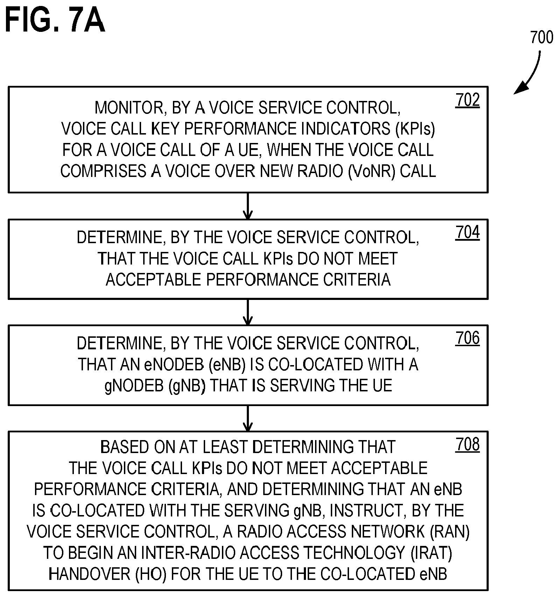

FIG. 7A illustrates a flowchart 700 of exemplary operations associated with examples of arrangement 100. In some examples, at least a portion of flowchart 700 may be performed using one or more computing devices 800 of FIG. 8. Flowchart 700 commences with operation 702, which includes monitoring, by a voice service control, voice call KPIs for the voice call of the UE, when the voice call comprises a VoNR call.

Operation 704 includes determining, by the voice service control, that the voice call KPIs do not meet acceptable performance criteria. Operation 706 includes determining, by the voice service control, that an eNB is co-located with a gNB that is serving the UE. Operation 706 includes, based on at least determining that the voice call KPIs do not meet acceptable performance criteria, and determining that an eNB is co-located with the serving gNB, instructing, by the voice service control, a RAN to begin an IRAT HO for the UE to the co-located eNB.

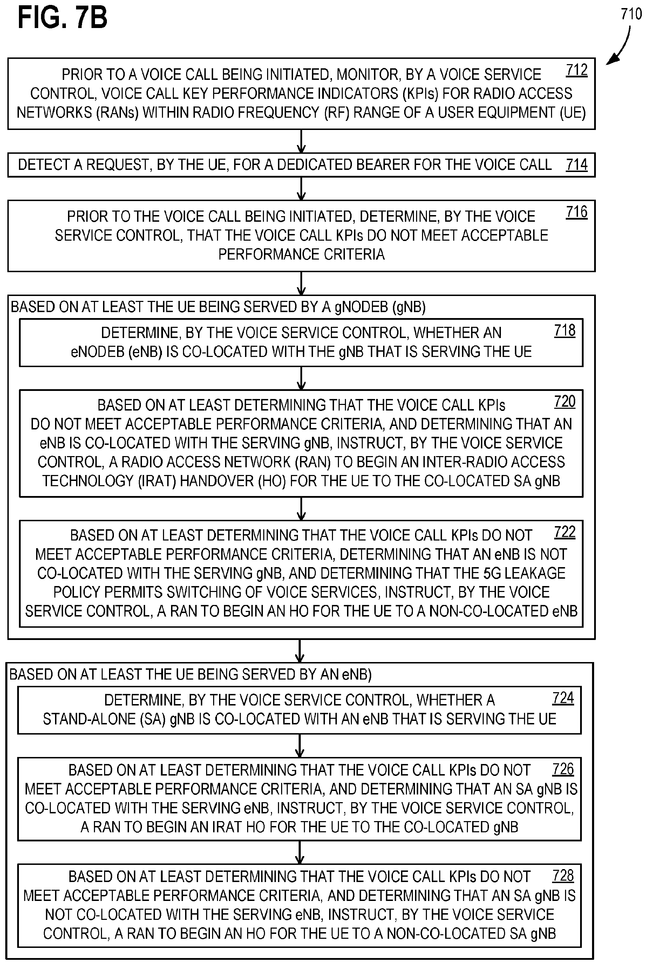

FIG. 7B illustrates a flowchart 710 of exemplary operations associated with examples of arrangement 100. In some examples, at least a portion of flowchart 710 may be performed using one or more computing devices 800 of FIG. 8. Flowchart 710 commences with operation 712, which includes prior to a voice call being initiated, monitoring, by a voice service control, voice call KPIs for RANs within RF range of a UE. Operation 714 includes detecting a request, from the UE, for a dedicated bearer for the voice call.

Operation 716 includes, prior to the voice call being initiated, determining, by the voice service control, that the voice call KPIs do not meet acceptable performance criteria. Operations 718-722 are performed based on at least the UE being served by a gNB. Operation 718 includes determining, by the voice service control, whether an eNB is co-located with the gNB that is serving the UE. Operation 720 includes, based on at least determining that the voice call KPIs do not meet acceptable performance criteria, and determining that an eNB is co-located with the serving gNB, instructing, by the voice service control, a RAN to begin an IRAT HO for the UE to the co-located eNB. Operation 722 includes, based on at least determining that the voice call KPIs do not meet acceptable performance criteria, determining that an eNB is not co-located with the serving gNB, and determining that the 5G leakage policy permits switching of voice services, instructing, by the voice service control, a RAN to begin an HO for the UE to a non-co-located eNB; and

Operations 724-728 are performed based on at least the UE being served by an eNB. Operation 724 includes determining, by the voice service control, whether an SA gNB is co-located with an eNB that is serving the UE. Operation 726 includes based on at least determining that the voice call KPIs do not meet acceptable performance criteria, and determining that an SA gNB is co-located with the serving eNB, instructing, by the voice service control, a RAN to begin an IRAT HO for the UE to the co-located gNB. Operation 728 includes based on at least determining that the voice call KPIs do not meet acceptable performance criteria, and determining that an SA gNB is not co-located with the serving eNB, instructing, by the voice service control, a RAN to begin an HO for the UE to a non-co-located SA gNB.

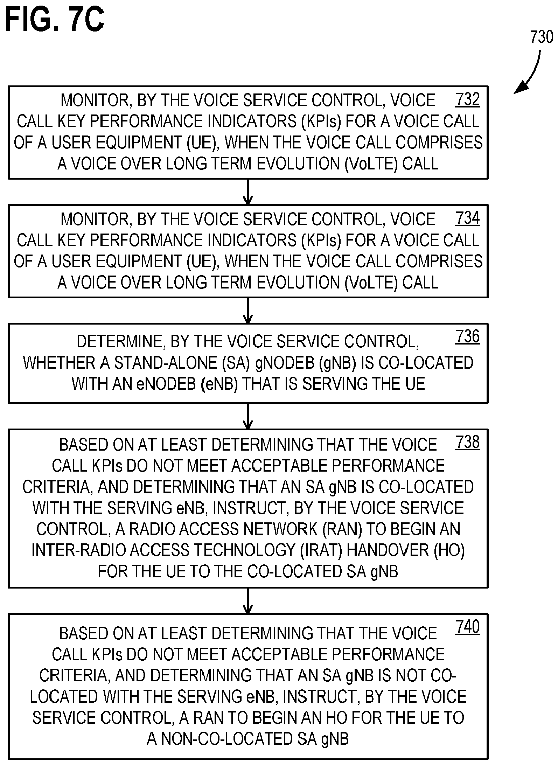

FIG. 7C illustrates a flowchart 730 of exemplary operations associated with examples of arrangement 100. In some examples, at least a portion of flowchart 730 may be performed using one or more computing devices 800 of FIG. 8. Flowchart 730 commences with operation 732, which includes monitoring, by the voice service control, voice call KPIs for a voice call of a UE, when the voice call comprises a VoLTE call. Operation 734 includes determining, by the voice service control, that the voice call KPIs do not meet acceptable performance criteria.

Operation 736 includes determining, by the voice service control, whether an SA gNB is co-located with an eNB that is serving the UE. Operation 738 includes, based on at least determining that the voice call KPIs do not meet acceptable performance criteria, and determining that an SA gNB is co-located with the serving eNB, instructing, by the voice service control, a RAN to begin an IRAT HO for the UE to the co-located SA gNB. Operation 740 includes, based on at least determining that the voice call KPIs do not meet acceptable performance criteria, and determining that an SA gNB is not co-located with the serving eNB, instructing, by the voice service control, a RAN to begin an HO for the UE to a non-co-located SA gNB.

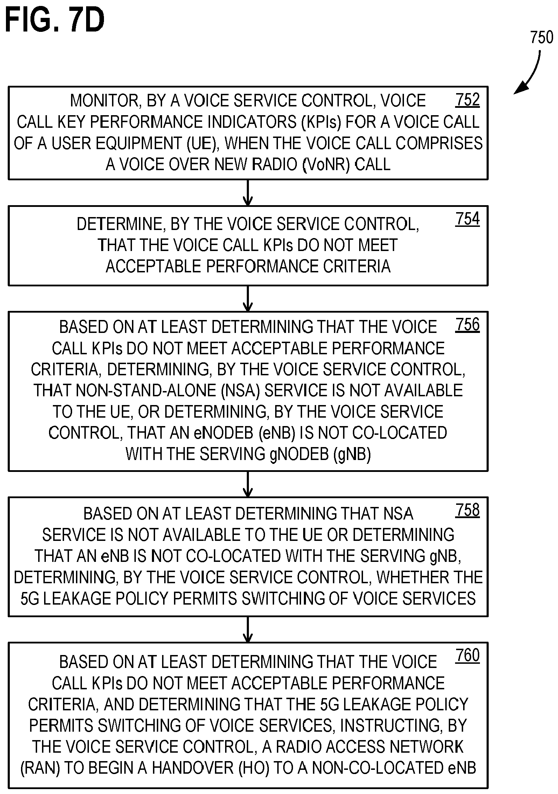

FIG. 7D illustrates a flowchart 750 of exemplary operations associated with examples of arrangement 100. In some examples, at least a portion of flowchart 750 may be performed using one or more computing devices 800 of FIG. 8. Flowchart 750 commences with operation 752, which includes monitoring, by a voice service control, voice call KPIs for a voice call of a UE, when the voice call comprises a VoNR call. Operation 754 includes determining, by the voice service control, that the voice call KPIs do not meet acceptable performance criteria.

Operation 756 includes, based on at least determining that the voice call KPIs do not meet acceptable performance criteria, determining, by the voice service control, that non-stand-alone (NSA) service is not available to the UE, or determining, by the voice service control, that an eNB is not co-located with the serving gNB. Operation 758 includes, based on at least determining that NSA service is not available to the UE or determining that an eNB is not co-located with the serving gNB, determining, by the voice service control, whether the 5G leakage policy permits switching of voice services. Operation 760 includes based on at least determining that the voice call KPIs do not meet acceptable performance criteria, and determining that the 5G leakage policy permits switching of voice services, instructing, by the voice service control, a radio access network (RAN) to begin an HO to a non-co-located eNB.

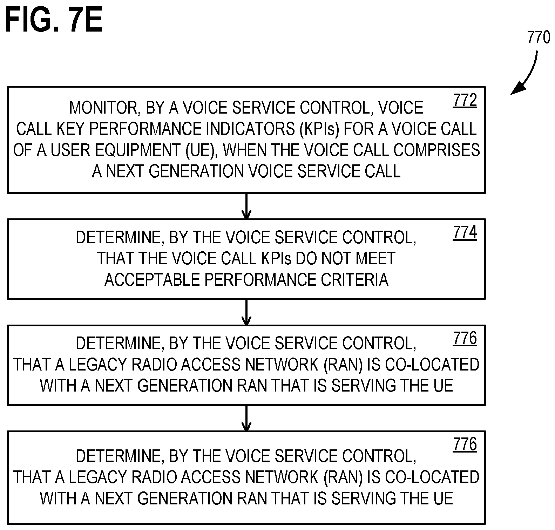

FIG. 7E illustrates a flowchart 770 of exemplary operations associated with examples of arrangement 100. In some examples, at least a portion of flowchart 770 may be performed using one or more computing devices 800 of FIG. 8. Flowchart 770 commences with operation 772, which includes monitoring, by a voice service control, voice call KPIs for a voice call of a UE, when the voice call comprises a next generation voice service call.

Operation 774 includes determining, by the voice service control, that the voice call KPIs do not meet acceptable performance criteria. Operation 776 includes determining, by the voice service control, that a legacy RAN is co-located with a next generation RAN that is serving the UE. Operation 778 includes, based on at least determining that the voice call KPIs do not meet acceptable performance criteria, and determining that the legacy RAN is co-located with the serving next generation RAN, instructing, by the voice service control, either the co-located legacy RAN or the serving next generation RAN to begin an IRAT HO for the UE to the co-located legacy RAN.

FIG. 8 illustrates a block diagram of computing device 800 that may be used as any component described herein that may require computational or storage capacity. Computing device 800 has at least a processor 802 and a memory 804 that holds program code 810, data area 820, and other logic and storage 830. Memory 804 is any device allowing information, such as computer executable instructions and/or other data, to be stored and retrieved. For example, memory 804 may include one or more random access memory (RAM) modules, flash memory modules, hard disks, solid-state disks, persistent memory devices, and/or optical disks. Program code 810 comprises computer executable instructions and computer executable components including any instructions necessary to perform operations described herein. Data area 820 holds any data necessary to perform operations described herein. Memory 804 also includes other logic and storage 830 that performs or facilitates other functions disclosed herein or otherwise required of computing device 800. An input/output (I/O) component 840 facilitates receiving input from users and other devices and generating displays for users and outputs for other devices. A network interface 850 permits communication over a network 860 with a remote node 870, which may represent another implementation of computing device 800. For example, a remote node 870 may represent another of the above-noted nodes within arrangement 100.

### Additional Examples

An example method of providing a voice call for a UE over a wireless network comprises: monitoring, by a voice service control, voice call KPIs for the voice call of the UE, when the voice call comprises a VoNR call; determining, by the voice service control, that the voice call KPIs do not meet acceptable performance criteria; determining, by the voice service control, that an eNB is co-located with a gNB that is serving the UE; and based on at least determining that the voice call KPIs do not meet acceptable performance criteria, and determining that an eNB is co-located with the serving gNB, instructing, by the voice service control, a RAN to begin an IRAT HO for the UE to the co-located eNB.

An example system for providing a voice call for a UE over a wireless network comprises: a processor; and a computer-readable medium storing instructions that are operative upon execution by the processor to: monitor, by a voice service control, voice call KPIs for the voice call of the UE, when the voice call comprises a VoNR call; determine, by the voice service control, that the voice call KPIs do not meet acceptable performance criteria; determine, by the voice service control, that an eNB is co-located with a gNB that is serving the UE; and based on at least determining that the voice call KPIs do not meet acceptable performance criteria, and determining that an eNB is co-located with the serving gNB, instruct, by the voice service control, a radio access network (RAN) to begin an inter-radio access technology (IRAT) handover (HO) for the UE to the co-located eNB.

One or more example computer storage devices has computer-executable instructions stored thereon, which, upon execution by a computer, cause the computer to perform operations comprising: monitoring, by a voice service control, voice call KPIs for a voice call of a UE, when the voice call comprises a VoNR call; determining, by the voice service control, that the voice call KPIs do not meet acceptable performance criteria; determining, by the voice service control, that an eNB is co-located with a gNB that is serving the UE; and based on at least determining that the voice call KPIs do not meet acceptable performance criteria, and determining that an eNB is co-located with the serving gNB, instructing, by the voice service control, a radio access network (RAN) to begin an inter-radio access technology (IRAT) handover (HO) for the UE to the co-located eNB.

Another example method of providing a voice call for a UE over a wireless network comprises: prior to the voice call being initiated, monitoring, by a voice service control, voice call KPIs for RANs within RF range of the UE; detecting a request, from the UE, for a dedicated bearer for the voice call; prior to the voice call being initiated, determining, by the voice service control, that the voice call KPIs do not meet acceptable performance criteria; based on at least the UE being served by a gNB: determining, by the voice service control, whether an eNB is co-located with the gNB that is serving the UE; based on at least determining that the voice call KPIs do not meet acceptable performance criteria, and determining that an eNB is co-located with the serving gNB, instructing, by the voice service control, a RAN to begin an IRAT HO for the UE to the co-located eNB; and based on at least determining that the voice call KPIs do not meet acceptable performance criteria, determining that an eNB is not co-located with the serving gNB, and determining that the 5G leakage policy permits switching of voice services, instructing, by the voice service control, a RAN to begin an HO for the UE to a non-co-located eNB; and based on at least the UE being served by an eNB: determining, by the voice service control, whether an SA gNB is co-located with an eNB that is serving the UE; based on at least determining that the voice call KPIs do not meet acceptable performance criteria, and determining that an SA gNB is co-located with the serving eNB, instructing, by the voice service control, a RAN to begin an IRAT HO for the UE to the co-located gNB; and based on at least determining that the voice call KPIs do not meet acceptable performance criteria, and determining that an SA gNB is not co-located with the serving eNB, instructing, by the voice service control, a RAN to begin an HO for the UE to a non-co-located SA gNB.

Another example method of providing a voice call for a UE over a wireless network comprises: monitoring, by the voice service control, voice call KPIs for the voice call of the UE, when the voice call comprises a VoLTE call; determining, by the voice service control, that the voice call KPIs do not meet acceptable performance criteria; determining, by the voice service control, whether an SA gNB is co-located with an eNB that is serving the UE; based on at least determining that the voice call KPIs do not meet acceptable performance criteria, and determining that an SA gNB is co-located with the serving eNB, instructing, by the voice service control, a RAN to begin an IRAT HO for the UE to the co-located SA gNB; and based on at least determining that the voice call KPIs do not meet acceptable performance criteria, and determining that an SA gNB is not co-located with the serving eNB, instructing, by the voice service control, a RAN to begin an HO for the UE to a non-co-located SA gNB.

Another example method of providing a voice call for a UE over a wireless network comprises: monitoring, by a voice service control, voice call KPIs for the voice call of the UE, when the voice call comprises a VoNR call; determining, by the voice service control, that the voice call KPIs do not meet acceptable performance criteria; based on at least determining that the voice call KPIs do not meet acceptable performance criteria, determining, by the voice service control, that NSA service is not available to the UE, or determining, by the voice service control, that an eNB is not co-located with the serving gNB; based on at least determining that NSA service is not available to the UE or determining that an eNB is not co-located with the serving gNB, determining, by the voice service control, whether the 5G leakage policy permits switching of voice services; and based on at least determining that the voice call KPIs do not meet acceptable performance criteria, and determining that the 5G leakage policy permits switching of voice services, instructing, by the voice service control, a RAN to begin an HO to a non-co-located eNB.

Another example method of providing a voice call for a UE over a wireless network comprises: monitoring, by a voice service control, voice call KPIs for a voice call of a UE, when the voice call comprises a next generation voice service call; determining, by the voice service control, that the voice call KPIs do not meet acceptable performance criteria; determining, by the voice service control, that a legacy RAN is co-located with a next generation RAN that is serving the UE; and based on at least determining that the voice call KPIs do not meet acceptable performance criteria, and determining that the legacy RAN is co-located with the serving next generation RAN, instructing, by the voice service control, either the co-located legacy RAN or the serving next generation RAN to begin an IRAT HO for the UE to the co-located legacy RAN.

Alternatively, or in addition to the other examples described herein, examples include any combination of the following:
- the wireless network comprises a 4G core;
- the wireless network comprises a 5G core;
- performing the IRAT HO of the UE to the co-located eNB;
- continuing the voice call as a VoLTE call;
- determining, by the voice service control, that NSA service is not available to the UE;
- determining, by the voice service control, that an eNB is not co-located with the serving gNB;
- determining, by the voice service control, whether the 5G leakage policy permits switching of voice services;
- based on at least determining that the 5G leakage policy permits switching of voice services, instructing, by the voice service control, a RAN to begin the HO to a non-co-located eNB;
- performing the IRAT HO of the UE to the non-co-located eNB;
- monitoring, by the voice service control, voice call KPIs for the voice call of the UE, when the voice call comprises a VoLTE call;
- determining, by the voice service control, when the voice call comprises a VoLTE call, that the voice call KPIs do not meet acceptable performance criteria;
- determining, by the voice service control, whether an SA gNB is co-located with an eNB that is serving the UE;
- instructing, by the voice service control, a RAN to begin an IRAT HO for the UE to the co-located SA gNB;
- based on at least determining that the voice call KPIs do not meet acceptable performance criteria, and determining that an SA gNB is not co-located with the serving eNB, instructing, by the voice service control, a RAN to begin an HO for the UE to a non-co-located SA gNB;
- performing the HO of the UE to the co-located SA gNB;
- performing the HO of the UE to the non-co-located SA gNB;
- continuing the voice call as a VoNR call;
- prior to the voice call being initiated, monitoring, by the voice service control, voice call KPIs for RANs within RF range of the UE;
- detecting a request, from the UE, for a dedicated bearer for the voice call;
- prior to the voice call being initiated, determining, by the voice service control, that the voice call KPIs do not meet acceptable performance criteria;
- determining, by the voice service control, whether an eNB is co-located with the gNB that is serving the UE;
- based on at least determining that the voice call KPIs do not meet acceptable performance criteria, and determining that an eNB is co-located with the serving gNB, instructing, by the voice service control, a RAN to begin an IRAT HO for the UE to the co-located eNB;
- based on at least determining that the voice call KPIs do not meet acceptable performance criteria, determining that an eNB is not co-located with the serving gNB, and determining that the 5G leakage policy permits switching of voice services, instructing, by the voice service control, a RAN to begin an HO for the UE to a non-co-located eNB;
- setting up the voice call as a VoLTE call;
- determining, by the voice service control, whether an SA gNB is co-located with an eNB that is serving the UE;
- based on at least determining that the voice call KPIs do not meet acceptable performance criteria, and determining that an SA gNB is co-located with the serving eNB, instructing, by the voice service control, a RAN to begin an IRAT HO for the UE to the co-located gNB;
- based on at least determining that the voice call KPIs do not meet acceptable performance criteria, and determining that an SA gNB is not co-located with the serving eNB, instructing, by the voice service control, a RAN to begin an HO for the UE to a non-co-located SA gNB;
- setting up the voice call as a VoNR call;
- determining whether the voice call KPIs meet acceptable performance criteria comprises comparing at least one voice call KPI with at least one voice call performance threshold;
- determining that a weighted combination of at least two voice call KPIs fails against at least two voice call performance thresholds;
- the at least one voice call performance threshold comprises at least one performance metric selected from the list consisting of: a maximum packet loss rate, a maximum packet latency value, a maximum jitter value, and a maximum dropped call rate;
- the voice call KPIs comprise at least one metric selected from the list consisting of: packet loss rate, packet latency, jitter, and dropped call rate;
- receiving, by the voice service control, the voice call KPIs from an MGW, or a RAN, or an external KPI database;
- monitoring voice call KPIs comprises monitoring MO voice call KPIs;
- monitoring voice call KPIs comprises monitoring MT voice call KPIs;
- the voice call comprises a video call with voice;
- the voice service control is located at a RAN;
- the voice service control is located at a MGW;
- storing, by the voice service control, the 5G leakage policy;
- monitoring, by the voice service control, voice call KPIs across the wireless network;
- setting a voice call performance threshold based on at least the voice call comprising HD voice versus non-HD voice;
- setting a voice call performance threshold based on at least the voice call comprising VoNR versus VoLTE;
- the measurement report comprises a received signal measurement for at least two RANs;
- the received signal measurement comprises a metric selected from the list consisting of: RSRP, RSRQ, and SINR;
- determining, by the voice service control, whether sufficient time has elapsed to perform a dynamic switch of voice services;
- the legacy voice service call comprises a VoLTE call;
- the legacy voice service call comprises a VoNR call;
- the next generation voice service call comprises a VoNR call;
- the legacy RAN comprises an eNB;
- the legacy RAN comprises a gNB;
- the next generation RAN comprises a gNB;
- performing the IRAT HO of the UE to the co-located legacy RAN; and
- continuing the voice call as a legacy voice service call.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure. It will be understood that the benefits and advantages described above may relate to one embodiment or may relate to several embodiments. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of."
Having described aspects of the disclosure in detail, it will be apparent that modifications and variations are possible without departing from the scope of aspects of the disclosure as defined in the appended claims. As various changes may be made in the above constructions, products, and methods without departing from the scope of aspects of the disclosure, it is intended that all matter contained in the above description and shown in the accompanying drawings shall be interpreted as illustrative and not in a limiting sense.

## Claims

1. A method of providing a voice call for a user equipment (UE) over a wireless network, the method comprising:
monitoring, by a voice service control (160), voice call key performance indicators (KPIs) for the voice call of the UE (102), when the voice call comprises a voice over new radio (VoNR) call;
determining, by the voice service control, that the voice call KPIs do not meet acceptable performance criteria (172);
determining, by the voice service control, that an eNodeB (eNB) is co-located with a gNodeB (gNB) that is serving the UE; and
based on at least determining that the voice call KPIs do not meet acceptable performance criteria, and determining that an eNB is co-located with the serving gNB, instructing, by the voice service control, a radio access network (RAN) (114, 115, 116) to begin an inter-radio access technology (IRAT) handover (HO) for the UE to the co-located eNB.

2. The method of claim 1, further comprising:
performing the IRAT HO of the UE to the co-located eNB; and
continuing the voice call as a voice over long term evolution (VoLTE) call.

3. The method of claim 1 or claim 2, further comprising:
determining, by the voice service control, that non-stand-alone (NSA) service is not available to the UE, or determining, by the voice service control, that an eNB is not co-located with the serving gNB;
based on at least determining that NSA service is not available to the UE or determining that an eNB is not co-located with the serving gNB, determining, by the voice service control, whether a 5G leakage policy permits switching of voice services;
based on at least determining that the 5G leakage policy permits switching of voice services, instructing, by the voice service control, a RAN to begin the HO to a non-co-located eNB;
performing the IRAT HO of the UE to the non-co-located eNB; and
continuing the voice call as a voice over long term evolution (VoLTE) call.

4. The method of any of claims 1 to 3, further comprising:
monitoring, by the voice service control, voice call KPIs for the voice call of the UE, when the voice call comprises a voice over long term evolution (VoLTE) call;
determining, by the voice service control, when the voice call comprises a VoLTE call, that the voice call KPIs do not meet acceptable performance criteria;
determining, by the voice service control, whether a stand-alone (SA) gNB is co-located with an eNB that is serving the UE;
based on at least determining that the voice call KPIs do not meet acceptable performance criteria, and determining that an SA gNB is co-located with the serving eNB, instructing, by the voice service control, a RAN to begin an IRAT HO for the UE to the co-located SA gNB; and
based on at least determining that the voice call KPIs do not meet acceptable performance criteria, and determining that an SA gNB is not co-located with the serving eNB, instructing, by the voice service control, a RAN to begin an HO for the UE to a non-co-located SA gNB;
performing the HO of the UE to the co-located SA gNB or the non-co-located SA gNB; and
continuing the voice call as a VoNR call.

5. The method of any of claims 1 to 4, further comprising:
prior to the voice call being initiated, monitoring, by the voice service control, voice call KPIs for RANs within radio frequency (RF) range of the UE;
detecting a request, from the UE, for a dedicated bearer for the voice call;
prior to the voice call being initiated, determining, by the voice service control, that the voice call KPIs do not meet acceptable performance criteria;
based on at least the UE being served by a gNB:
determining, by the voice service control, whether an eNB is co-located with the gNB that is serving the UE;
based on at least determining that the voice call KPIs do not meet acceptable performance criteria, and determining that an eNB is co-located with the serving gNB, instructing, by the voice service control, a RAN to begin an IRAT HO for the UE to the co-located eNB;
based on at least determining that the voice call KPIs do not meet acceptable performance criteria, determining that an eNB is not co-located with the serving gNB, and determining that a 5G leakage policy permits switching of voice services, instructing, by the voice service control, a RAN to begin an HO for the UE to a non-co-located eNB;
performing the HO of the UE to the co-located eNB or the non-co-located eNB; and
setting up the voice call as a voice over long term evolution (VoLTE) call; and
based on at least the UE being served by an eNB,
determining, by the voice service control, whether a stand-alone (SA) gNB is co-located with an eNB that is serving the UE;
based on at least determining that the voice call KPIs do not meet acceptable performance criteria, and determining that an SA gNB is co-located with the serving eNB, instructing, by the voice service control, a RAN to begin an IRAT HO for the UE to the co-located gNB;
based on at least determining that the voice call KPIs do not meet acceptable performance criteria, and determining that an SA gNB is not co-located with the serving eNB, instructing, by the voice service control, a RAN to begin an HO for the UE to a non-co-located SA gNB;
performing the HO of the UE to the co-located SA gNB or the non-co-located SA gNB; and
setting up the voice call as a VoNR call.

6. The method of any of claims 1 to 5,
wherein determining whether the voice call KPIs meet acceptable performance criteria comprises comparing at least one voice call KPI with at least one voice call performance threshold;
wherein the at least one voice call performance threshold comprises at least one performance metric selected from the list consisting of:
a maximum packet loss rate, a maximum packet latency value, a maximum jitter value, and a maximum dropped call rate; and
wherein the voice call KPIs comprise at least one metric selected from the list consisting of:
packet loss rate, packet latency, jitter, and dropped call rate.

7. The method of any of claims 1 to 6, further comprising:
receiving, by the voice service control, the voice call KPIs from a media gateway (MGW), or a RAN, or an external KPI database.

8. A system for providing a voice call for a user equipment (UE) over a wireless network, the system comprising:
a processor (802); and
a computer-readable medium (804) storing instructions that are operative upon execution by the processor to:
monitor, by a voice service control (160), voice call key performance indicators (KPIs) for the voice call of the UE (102), when the voice call comprises a voice over new radio (VoNR) call;
determine, by the voice service control, that the voice call KPIs do not meet acceptable performance criteria (172);
determine, by the voice service control, that an eNodeB (eNB) is co-located with a gNodeB (gNB) that is serving the UE; and
based on at least determining that the voice call KPIs do not meet acceptable performance criteria, and determining that an eNB is co-located with the serving gNB, instruct, by the voice service control, a radio access network (RAN) (114, 115, 116) to begin an inter-radio access technology (IRAT) handover (HO) for the UE to the co-located eNB.

9. The system of claim 8, wherein the instructions are further operative to:
perform the IRAT HO of the UE to the co-located eNB; and
continue the voice call as a voice over long term evolution (VoLTE) call.

10. The system of claim 8 or 9, wherein the instructions are further operative to:
determine, by the voice service control, that non-stand-alone (NSA) service is not available to the UE, or determining, by the voice service control, that an eNB is not co-located with the serving gNB;
based on at least determining that NSA service is not available to the UE or determining that an eNB is not co-located with the serving gNB, determine, by the voice service control, whether a 5G leakage policy permits switching of voice services;
based on at least determining that the 5G leakage policy permits switching of voice services, instruct, by the voice service control, a RAN to begin the HO to a non-co-located eNB;
perform the IRAT HO of the UE to the non-co-located eNB; and
continue the voice call as a voice over long term evolution (VoLTE) call.

11. The system of any of claims 8 to 10, wherein the instructions are further operative to:
monitor, by the voice service control, voice call KPIs for the voice call of the UE, when the voice call comprises a voice over long term evolution (VoLTE) call;
determine, by the voice service control, when the voice call comprises a VoLTE call, that the voice call KPIs do not meet acceptable performance criteria;
determine, by the voice service control, whether a stand-alone (SA) gNB is co-located with an eNB that is serving the UE;
based on at least determining that the voice call KPIs do not meet acceptable performance criteria, and determining that an SA gNB is co-located with the serving eNB, instruct, by the voice service control, a RAN to begin an IRAT HO for the UE to the co-located SA gNB; and
based on at least determining that the voice call KPIs do not meet acceptable performance criteria, and determining that an SA gNB is not co-located with the serving eNB, instruct, by the voice service control, a RAN to begin an HO for the UE to a non-co-located SA gNB;
perform the HO of the UE to the co-located SA gNB or the non-co-located SA gNB; and
continue the voice call as a VoNR call.

12. The system of any of claims 8 to 11, wherein the instructions are further operative to:
prior to the voice call being initiated, monitor, by the voice service control, voice call KPIs for RANs within radio frequency (RF) range of the UE;
detect a request, by the UE, for a dedicated bearer for the voice call;
prior to the voice call being initiated, determine, by the voice service control, that the voice call KPIs do not meet acceptable performance criteria;
based on at least the UE being served by a gNB:
determine, by the voice service control, whether an eNB is co-located with the gNB that is serving the UE;
based on at least determining that the voice call KPIs do not meet acceptable performance criteria, and determining that an eNB is co-located with the serving gNB, instruct, by the voice service control, a RAN to begin an IRAT HO for the UE to the co-located eNB;
based on at least determining that the voice call KPIs do not meet acceptable performance criteria, determining that an eNB is not co-located with the serving gNB, and determining that a 5G leakage policy permits switching of voice services, instruct, by the voice service control, a RAN to begin an HO for the UE to a non-co-located eNB;
perform the HO of the UE to the co-located eNB or the non-co-located eNB; and
set up the voice call as a voice over long term evolution (VoLTE) call; and
based on at least the UE being served by an eNB,
determine, by the voice service control, whether a stand-alone (SA) gNB is co-located with an eNB that is serving the UE;
based on at least determining that the voice call KPIs do not meet acceptable performance criteria, and determining that an SA gNB is co-located with the serving eNB, instruct, by the voice service control, a RAN to begin an IRAT HO for the UE to the co-located gNB;
based on at least determining that the voice call KPIs do not meet acceptable performance criteria, and determining that an SA gNB is not co-located with the serving eNB, instruct, by the voice service control, a RAN to begin an HO for the UE to a non-co-located SA gNB;
perform the HO of the UE to the co-located SA gNB or the non-co-located SA gNB; and
setting up the voice call as a VoNR call.

13. The system of any of claims 8 to 12,
wherein determining whether the voice call KPIs meet acceptable performance criteria comprises comparing at least one voice call KPI with at least one voice call performance threshold;
wherein the at least one voice call performance threshold comprises at least one performance metric selected from the list consisting of:
a maximum packet loss rate, a maximum packet latency value, a maximum jitter value, and a maximum dropped call rate; and
wherein the voice call KPIs comprise at least one metric selected from the list consisting of:
packet loss rate, packet latency, jitter, and dropped call rate.

14. The system of any of claims 8 to 13, wherein the instructions are further operative to:
receive, by the voice service control, the voice call KPIs from a media gateway (MGW), or a RAN, or an external KPI database.

15. One or more computer storage devices having computer-executable instructions stored thereon, which, upon execution by a computer, cause the computer to perform operations comprising:
monitoring, by a voice service control (160) , voice call key performance indicators (KPIs) for a voice call of a user equipment (UE) (102), when the voice call comprises a voice over new radio (VoNR) call;
determining, by the voice service control, that the voice call KPIs do not meet acceptable performance criteria (172);
determining, by the voice service control, that an eNodeB (eNB) is co-located with a gNodeB (gNB) that is serving the UE; and
based on at least determining that the voice call KPIs do not meet acceptable performance criteria, and determining that an eNB is co-located with the serving gNB, instructing, by the voice service control, a radio access network (RAN) (114, 115, 116) to begin an inter-radio access technology (IRAT) handover (HO) for the UE to the co-located eNB.
